# EUROPEAN PATENT SPECIFICATION

(11) **EP 4 345 260 B1**
(45) Date of publication and mention of the grant of the patent: **25.11.2026**
(21) Application number: 24157701.4
(22) Date of filing: 10.10.2017
(51) Int. Cl.: F01D 25/16, F02C 7/20, F01D 25/24

(54) **MONOLITHIC SUPERSTRUCTURE TO SUPPORT A ROTOR FOR A GAS TURBINE ENGINE**
MONOLITHISCHE SUPERSTRUKTUR ZUR UNTERSTÜTZUNG EINES ROTORS FÜR EIN GASTURBINEN-TRIEBWERK
SUPERSTRUCTURE MONOLITHIQUE POUR SUPPORTER UN ROTOR D'UN MOTEUR À TURBINE À GAZ

(30) Priority: 15.11.2016 US 201615352253
(43) Date of publication of application: 03.04.2024
(62) Document number(s) of the earlier application(s) in accordance with Art. 76 EPC: 20200997.3 / 3 789 592; 17791788.7 / 3 523 508
(73) Proprietor: General Electric Company, Evendale, OH 45215 (US)
(72) Inventor: MOOK, Joshua Tyler, Evendale, 45215-1988 (US); MANTEIGA, John Alan, Evendale, 45215-1988 (US); WILLIAMS, Christopher, West Chester, 45069 (US)
(74) Representative: Openshaw & Co.

(56) References cited:
- EP-A1- 3 115 551
- EP-A1- 3 203 037
- WO-A1-2014/105577
- US-A- 3 319 930
- US-A1- 2005 235 651
- US-A1- 2007 036 646
- US-A1- 2014 255 181
- US-A1- 2015 052 872

## Description

### TECHNICAL FIELD OF THE INVENTION

The present disclosure generally relates to monolithic superstructures for supporting a rotating shaft coupled to a rotor relative to a stator. In an example, the rotor is an impeller for a gas turbine engine and the stator is an aero component for directing compressed air from the impeller. The invention relates to a monolithic superstructure to support a rotor for a gas turbine engine.

### BACKGROUND

In a gas turbine engine, intake air is compressed by a compressor. Fuel is added to the compressed air and ignited in a combustor. The expanding hot air passes through a turbine and out of a nozzle providing thrust. The turbine converts some of the energy of the expanding hot air into rotational energy for powering the compressor.

An interface between the compressor and combustor includes critical spacing between the rotating impeller and a stationary aero component. In an aspect, the rotating impeller is a final centripetal compressor impeller that produces highly compressed air. The stationary aero component directs the compressed air into the combustor while diffusing the pressure and reducing swirling currents within the compressed air. The alignment and clearance between the impeller and the aero component is a critical dimension that affects the performance of the gas turbine engine. If the components become misaligned or the clearance becomes too great, the compressed air does not correctly enter the combustor.

In conventional gas turbine engines, an impeller shroud is mounted to a combustor case (e.g., via bolts or rivets). The aero component is supported at the connection between the impeller shroud and combustor case. As temperatures of the engine increase, thermal expansion causes the aero component to move with respect to the impeller. Accordingly, the alignment and clearance between the aero component and the impeller changes, leading to decreased performance of the engine.

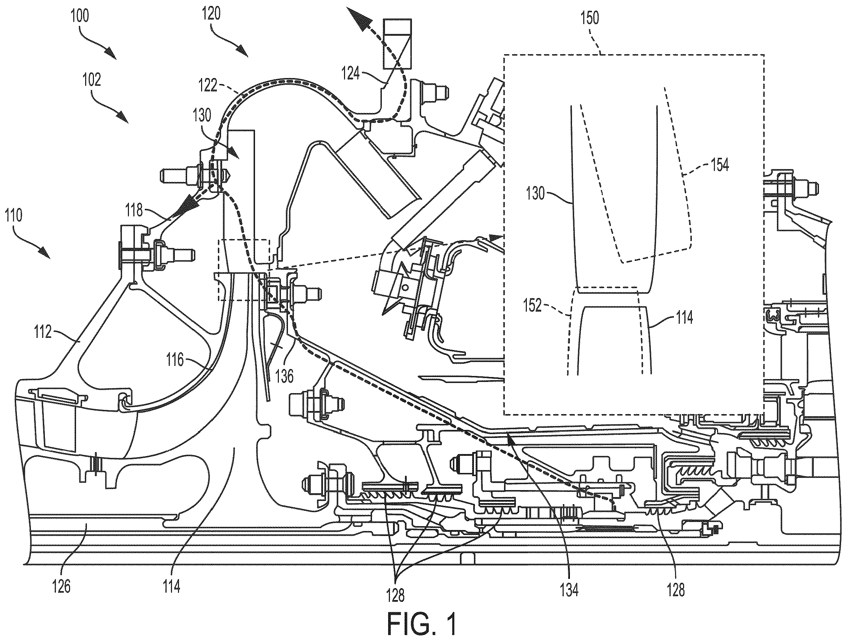

FIG. 1 is schematic diagram showing a cross-sectional view of an exemplary conventional system 100 including an interface 102 between a compressor 110 and combustor 120. A compressor case 112 is coupled with an impeller shroud 116. An impeller 114 rotates along with the shaft 126. The impeller shroud 116 is coupled to a combustor case 122 via a connector 118. The shaft 128 is rotatably supported by bearings 128. The bearings 128 transfer load from the shaft 126 to a sump housing 134. The sump housing 134 is coupled to the aero component 130, which in turn is mounted to the combustor case 122 at the connection between the connector 118 and the combustor case 122. The combustor case 122 includes a mounting point 124 for mounting the system 100 to a vehicle or other frame (e.g. a generator housing).

A load path 136 illustrates the distribution of load from the shaft 126 in the conventional system 100. The load is applied to the bearings 128 and transferred to the sump housing 134. The sump housing 134 transfers load to the aero component 130, which in turn transfers load to both the compressor 110 via the connector 118 and to the combustor 120 including the mounting point 124.

The inset portion 150 illustrates relative movement of the impeller 116 and the aero component 130 as the temperature of the system 100 changes. As indicated by the solid lines, when the system is relatively cold, the impeller 116 and the aero component 130 are aligned with a small clearance therebetween. The clearance may be, for example, approximately 20 mils. As illustrated by the dashed lines, when the system is relatively hot, thermal expansion causes the hot aero component to shift radially outward and longitudinally distal. These directions are due, in part, to the aero component 130 exerting load to the compressor 110 via the connector 118, which adds a longitudinal component to the expansion. The hot impeller 152 shifts radially outward. The clearance between the impeller 116 and the aero component 150 increases and the components become misaligned.

In view of the above, it can be appreciated that there are problems, shortcomings or disadvantages associated with supporting a rotor such as an impeller with respect to a stator such as an aero component in gas turbine engines, and that it would be desirable if improved systems and methods for supporting a rotor with respect to a stator were devised.

US 2007/036646 A1 relates to an integrated assembly, with diffuser and deswirler, for a centrifugal compressor, which integrates selected static portions of the centrifugal compressor into a monolithic structure to allow a small deflection of the inner flow path at assembly.

### SUMMARY

The following presents a simplified summary of one or more aspects of the invention in order to provide a basic understanding of such aspects. This summary is not an extensive overview of all contemplated aspects, and is intended to neither identify key or critical elements of all aspects nor delineate the scope of any or all aspects. Its purpose is to present some concepts of one or more aspects in a simplified form as a prelude to the more detailed description that is presented later.

In one aspect, the invention provides a monolithic superstructure to support a rotor of a gas turbine engine as set forth in claim 1. Further aspects of the invention are presented as set forth in the dependent claims.

These and other aspects of the invention will become more fully understood upon a review of the detailed description, which follows.

### BRIEF DESCRIPTION OF THE DRAWINGS

FIG. 1 is schematic diagram showing an example of a conventional gas turbine engine including an interface between a compressor and a combustor.
FIG. 2 illustrates a perspective view of an exemplary superstructure according to an aspect of the disclosure.
FIG. 3 illustrates a top view of the exemplary superstructure of FIG. 2.
FIG. 4 illustrates a forward view of the exemplary superstructure of FIG. 2.
FIG. 5 illustrates an aft view of the exemplary superstructure of FIG. 2.
FIG. 6 illustrates an axial cross section of the exemplary superstructure of FIG. 2.
FIG. 7 illustrates another axial cross section of the exemplary superstructure of FIG. 2.
FIG. 8 illustrates a radial cross-section through a forward region of the exemplary superstructure.
FIG. 9 illustrates another radial cross-section through an aero component of the exemplary superstructure.
FIG. 10 is schematic diagram showing an example of a load path for the exemplary superstructure.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components are shown in block diagram form in order to avoid obscuring such concepts.

As used herein, the terms "axial" or "axially" refer to a dimension along a longitudinal axis of an engine. The term "forward" used in conjunction with "axial" or "axially" refers to moving in a direction toward the engine inlet, or a component being relatively closer to the engine inlet as compared to another component. The term "aft" used in conjunction with "axial" or "axially" refers to moving in a direction toward the rear or outlet of the engine, or a component being relatively closer to the outlet than the inlet.

As used herein, the terms "radial" or "radially" refer to a dimension extending between a center longitudinal axis of the engine and an outer engine circumference. The use of the terms "proximal" or "proximally," either by themselves or in conjunction with the terms "radial" or "radially," refers to moving in a direction toward the center longitudinal axis, or a component being relatively closer to the center longitudinal axis as compared to another component. The use of the terms "distal" or "distally," either by themselves or in conjunction with the terms "radial" or "radially," refers to moving in a direction toward the outer engine circumference, or a component being relatively closer to the outer engine circumference as compared to another component. As used herein, the terms "lateral" or "laterally" refer to a dimension that is perpendicular to both the axial and radial dimensions.

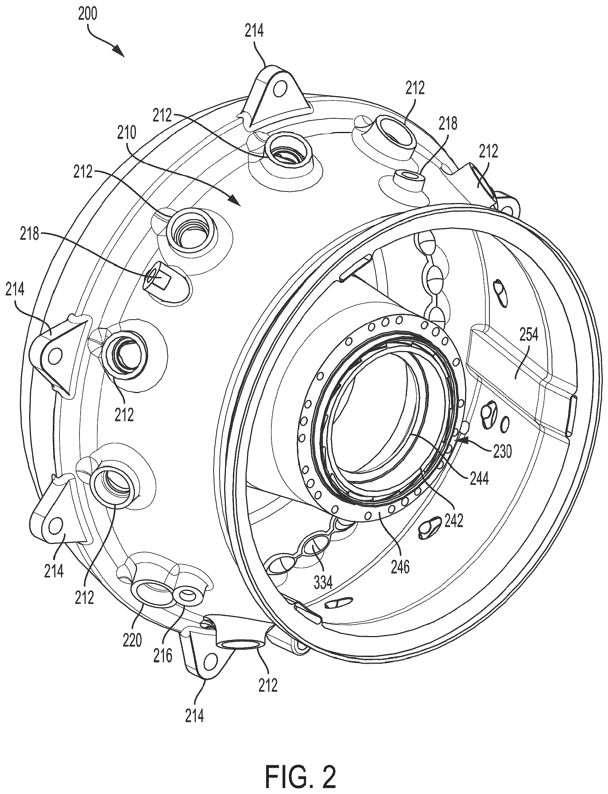

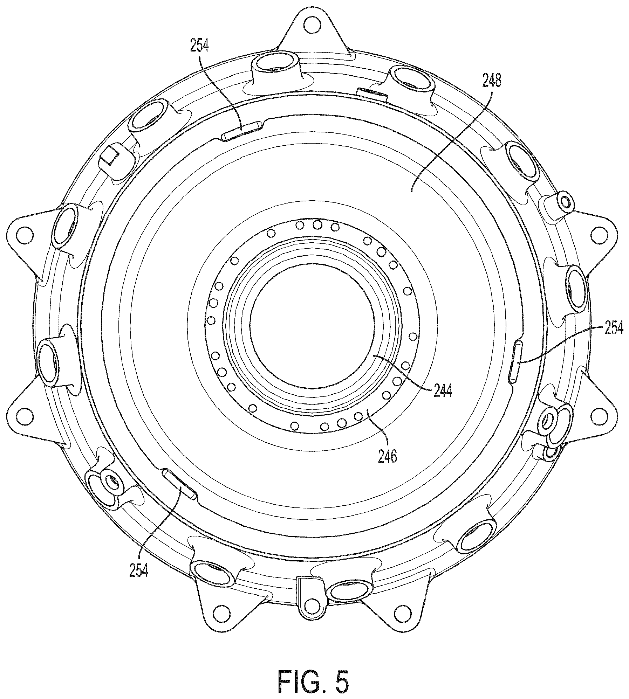

FIGS. 2-9 illustrate an exemplary monolithic superstructure 200 according to an aspect of the disclosure. FIG. 2 illustrates a perspective view of the monolithic superstructure 200. The monolithic superstructure 200 may be a superstructure for a combustor in a gas turbine engine. In an aspect, the monolithic superstructure 200 is be a single integrated component that performs functions of multiple components in conventional combustors. For example, the monolithic superstructure 200 perform functions of an aero component, which typically includes a separate diffuser, deswirler, swirl plate, and diffuser case. The monolithic superstructure 200 also performs the functions of a combustor case assembly (e.g., routing fuel, air, and instrumentation to various components of the combustor). The monolithic superstructure 200 also performs the functions of a bearing sump of supporting the shaft and managing turbine cooling air using an inner shroud. As discussed in further detail below, by combining the various functions of combustor components into an integrated component, the monolithic superstructure 200 reduces the total weight of the combustor. The monolithic superstructure 200 also allows for design of optimized paths, thereby requiring lower oil volumes and transport lengths. Further, the monolithic superstructure eliminates assembly risks and fastener failures.

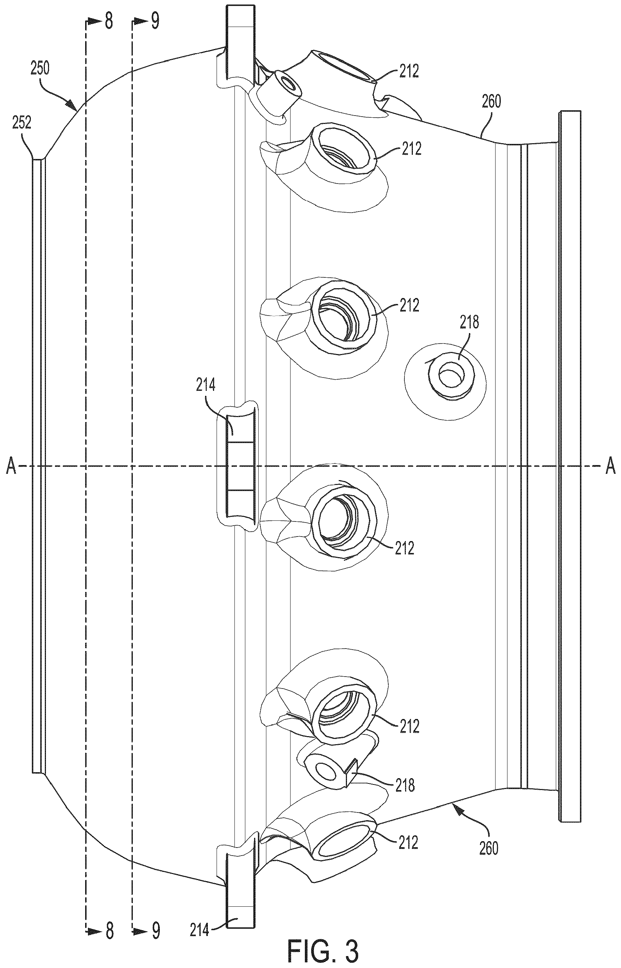

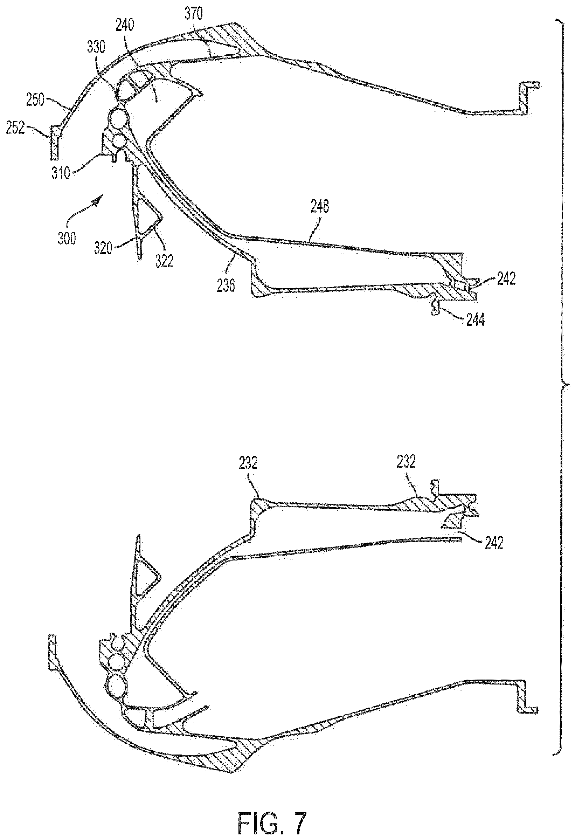

The monolithic superstructure 200 includes an outer case 210 that corresponds to a conventional combustor case and a diffuser case. As best seen in FIGS. 3 and 7, the outer case 210 may include a diffuser case portion 250 at a longitudinally proximal region and a combustor case portion 260 at a longitudinally distal region. The outer case 210 includes fuel nozzle ports 212 in the combustor case portion 260 for receiving fuel lines and mounting fuel nozzles. The outer case 210 also includes mounting tabs 214 located between the diffuser case portion 250 and the combustor case portion 260. The mounting tabs 214 are spaced about the outer case 210 and extend radially outward. The mounting tabs 214 are used to mount the monolithic superstructure 200 to a frame such as a vehicle frame or a generator frame. The diffuser case portion 250 includes a compressor flange 252 for mounting to a compressor case. The outer case 210 also includes igniter ports 216 for passing an ignition wire through the outer case 210. The outer case 210 also includes instrumentation ports 218 for passing instruments and or wires through the outer case 210. The outer case 210 also includes cooling air passages 254 for routing cooling air from a forward portion of the monolithic superstructure 200 to an aft component such as a turbine.

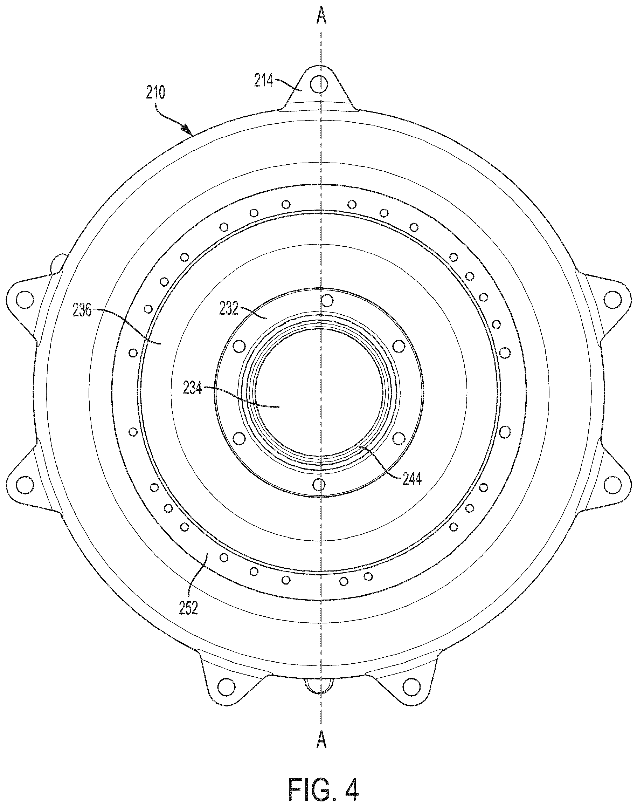

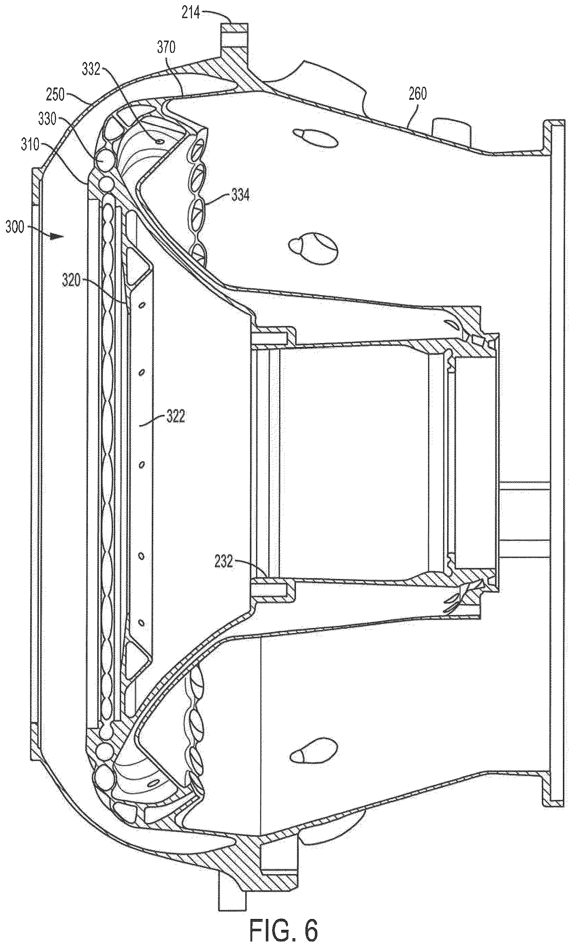

As best seen in FIGS. 6 and 7, the monolithic superstructure 200 also includes a centrally located bearing sump housing 230. The bearing sump housing 230 includes bearing supports 232 for mounting bearings that supporting a shaft 234 (shown in FIG. 4). The bearing sump housing 230 further includes a conical portion 236 that supports an aero component 300. The conical portion 236 is an annular transfer portion extending longitudinally proximally from the bearing supports 232 toward the aero component 300. The conical portion 236 transfers a load from the bearing supports 232 to the aero component 300. In an aspect, the conical portion 236 is shaped to maintain a position of the aero component 300 with respect to the bearing sump housing 230 and an impeller. The bearing sump housing 230 further includes a turbine cooling passage 240 defined between the conical portion 236, the aero component 300, and an inner combustor shroud 148. The turbine cooling passage 240 draws clean air from the aero component 300 and provides the clean air to turbine cooling blades (not shown) via an accelerator 242. The inner combustor shroud guides the clean air and also provides a heat shield for the bearing sump housing 230. The bearing sump housing further includes a bearing sump sealing surface 244. For example, the bearing sump sealing surface 244 may be an inwardly extending flange. The bearing sump sealing surface 244 may form a seal for the bearings. The bearing sump housing includes a turbine mounting surface 246 for connecting to a turbine.

The aero component 300 receives air from a compressor impeller 114 and provides compressed air to the combustor. For example, the aero component 300 performs functions traditionally performed by a diffuser and a deswirler. In an aspect, the compressor impeller 114 may be considered a rotor and the aero component 300 may be considered a stator. The aero component 300 divides an interior of the outer case 210 into a forward region and an aft region. As will be discussed in further detail below, the aero component 300 is also a load bearing component that transfers loads from the bearing sump housing 230 to the outer case 210 and the mounting tabs 214. The aero component 300 includes a diffuser portion 310, a back wall swirl plate 320, deswirler tubes 330, and an aero component support 370.

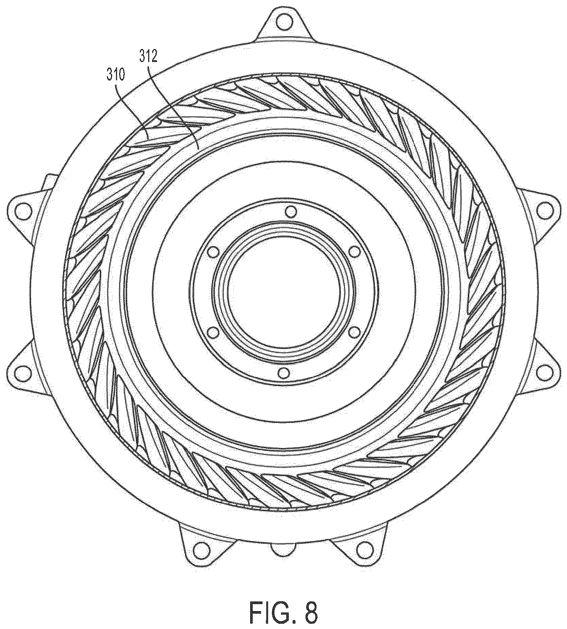

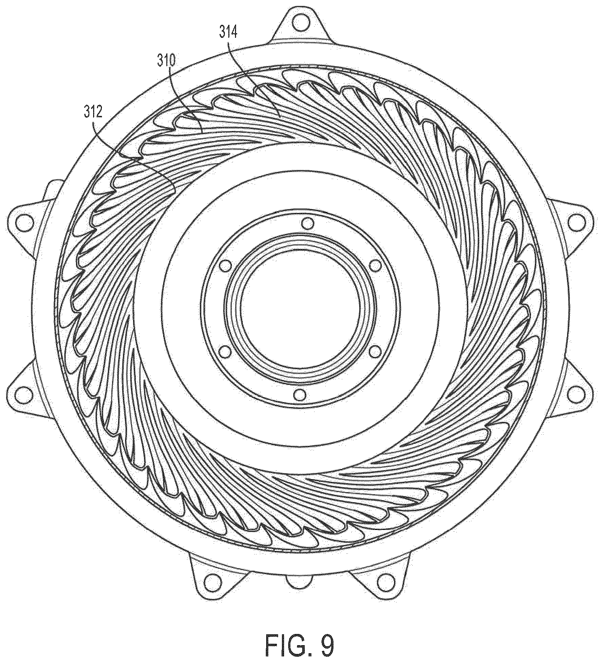

FIG. 8 illustrates a lateral cross-section along the line 8-8 in FIG. 3. The diffuser portion 310 is an annular member extending radially inward to an edge 312. FIG. 9 illustrates a lateral cross-section along the line 9-9 in FIG. 3 through the diffuser portion 310. As best seen in FIG. 9, the diffuser portion 310 includes a plurality of internal passages 314 extending radially outward from the edge 312. The openings of the passages at the edge 312 are aligned with the final compressor impeller. The internal passages 314 expand in diameter as they extend from the edge 312 toward the deswirler tubes 330. As discussed in further detail below, the clearance between the diffuser portion 310 and the compressor impeller may be a performance critical spacing. For example, as the distance between the diffuser portion 310 and the impeller increases, pressurized air is less efficiently transferred to the aero component 300 via the internal passages 314.

The back wall swirl plate 320 is a plate located aft of the compressor impeller. The back wall swirl plate 320 deflects air exiting the compressor impeller to a radially outward direction. In an embodiment, the back wall swirl plate 320 further includes an impeller backwall stiffener 322. The impeller backwall stiffener 322 is an annular member with a triangular cross section that resists forces from the impeller. Further, the impeller backwall stiffener 322 provides frequency tuning to cancel resonant frequency noise generated by the engine.

The deswirler tubes 330 are a plurality of conjoined tubes that extend from the diffuser portion 310 to the inside of the combustor case portion 260. Each tube first extends radially outward from the diffuser portion 310. Each tube then curves both longitudinally and laterally. In an aspect, the lateral curvature is opposite a direction of the impeller movement. Accordingly, the deswirler tubes 330 reduce lateral swirling of the compressed air. The longitudinal curvature of the deswirler tubes 330 extends from the forward region to deswirler outlets 334 located within the combustor case portion 260 in the aft region. The deswirler tubes 330 may be the only path from the forward region to the aft region. In an aspect, the deswirler tubes 330 may include air extraction ports 332 for turbine cooling and sump pressurization. For example, the air extraction ports may connect an interior of the deswirler tubes 330 to the turbine cooling passage 240.

The aero component support 370 is an annular member that supports the aero component 300 with respect to the outer case 210. The aero component support 370 transfers bearing loads from the aero component 300 to the outer case 210 near the mounting tabs 214. The aero component support 370 extends longitudinally and radially from the deswirler tubes 330 to the outer case 210. In an aspect, the outer case 210 may be a relatively lower temperature than the aero component 300 and the bearing sump housing 230. For example, in operation, the aero component 300 may be hotter than the outer case 210 by 200 degrees Fahrenheit or more. The bearing sump housing 230 may be even hotter than the aero component 300.

Various properties of the aero component support 370 may be selected for a particular engine to optimize transfer of loads and thermal management. In particular, the shape of the aero component support 370 may be selected to maintain the position of the aero component 300 with respect to the impeller as the temperature of the engine increases. For example, the aero component support 370 may allow radial expansion of the aero component 300, while resisting longitudinal movement of the aero component 300. The radial expansion of the aero component 300 may correspond to radial expansion of the impeller, thereby maintaining a critical clearance between the impeller and the aero component. By resisting longitudinal movement of the aero component 300, the aero component support 370 maintains an alignment between the impeller and the diffuser portion 310.

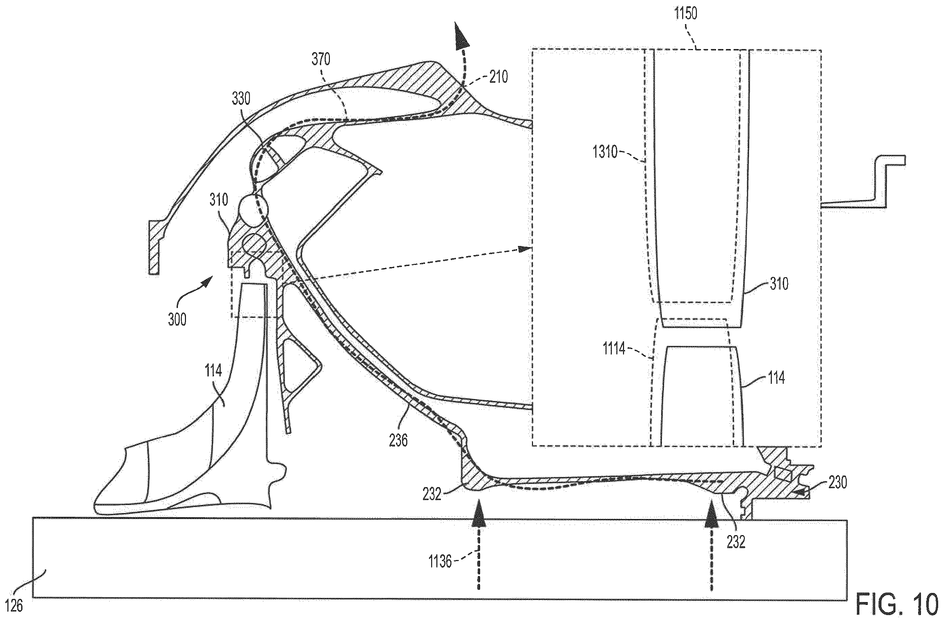

FIG. 10 is a schematic diagram illustrating a load path 1136 for an exemplary superstructure. The shaft 126 exerts load on the bearing supports 232. The bearing supports 232 transfer the load to the bearing sump housing 230. The conical portion 236 transfers the load to the aero component 300. In this example, the conical portion is connected to the aero component between the back wall swirl plate 320 and the deswirler tubes 330. The deswirler tubes 330 transfer the load to the annular aero component support 370. The annular aero component support 370 transfers the load to the outer case 210 including the mounting tabs 214.

The diffuser portion 310 is positioned a critical dimension from the impeller 114. The diffuser portion 310 is supported by the conical portion 236 and by the annular aero component support 370 via the deswirler tubes 330. It should be noted, that the diffuser portion 310 is not directly connected to the diffuser case portion 250. Accordingly, the load path 1136 does not include an axial component through the diffuser portion 310, unlike the load path 136 in FIG. 1. The inset 1150 shows a magnified view of the interface between the impeller 114 and the diffuser portion 310. When the impeller 114 and the diffuser portion 310 are cold (e.g., at startup, as illustrated by solid lines), there is a small space between the impeller 114 and the diffuser portion 310. Moreover, the impeller 114 and the diffuser portion 310 are aligned such that compressed air exiting the impeller radially is transferred to the diffuser. As the system heats up (e.g., during operation, as illustrated by the dashed lines), the hot impeller 1114 may expand radially and shifts forward slightly. Due the support structure of the aero component 300 and the load path 1136, the hot diffuser 1310 also expands radially and shifts forward slightly. The forward shift may be kept below a threshold. Accordingly, the spacing between the hot impeller 1114 and the hot diffuser 1310 remains approximately the same as the spacing between the cold impeller 114 and the cold diffuser portion 310. In an aspect, the critical dimension between the impeller 114 and the diffuser portion 310 is maintained within 10% when the temperature of the system increases by at least 200 degrees Fahrenheit. Moreover, the hot diffuser 1310 maintains a radial alignment. For example, unlike the hot diffuser 154 the hot diffuser 1310 maintains the same orientation with respect to the impeller 114. Accordingly, the interface between the impeller 114 and the diffuser portion 310 maintains transfer efficiency as the system heats up.

The monolithic superstructure 200 may be manufactured using an additive manufacturing (AM) process. AM encompasses various manufacturing and prototyping techniques known under a variety of names, including freeform fabrication, 3D printing, rapid prototyping/tooling, etc. AM techniques are capable of fabricating complex components from a wide variety of materials. Generally, a freestanding object can be fabricated from a computer aided design (CAD) model. A particular type of AM process, direct metal laser melting (DMLM), uses an energy beam, for example, an electron beam or electromagnetic radiation such as a laser beam, to sinter or melt a powder material, creating a solid three-dimensional object in which particles of the powder material are bonded together. AM may be particularly applicable for manufacturing, for example, the monolithic superstructure 200, which includes multiple concentric and coaxial subcomponents. In an aspect, the monolithic superstructure 200 may be fabricated in a layer-by-layer manner along the longitudinal axis. The AM process may fabricate the monolithic superstructure as an integrated structure. Various supports may be used to position portions of the monolithic superstructure during a build process. The supports and any unfused powder may be removed from the monolithic superstructure 200 upon completion. Further, additional components such as replaceable bearings, fuel lines, instrumentation, etc. may be mounted to the superstructure. In an aspect, one or more of the components described above may be replaced with a similar component mounted to a fixture integrated into the superstructure.

In an aspect, the monolithic and integrated design of the monolithic superstructure 200 integrates services and features as a single component. Design optimization may be performed for the integrated design rather than at a sub-component level. For example, lead paths, case and pressure vessel properties, aerodynamics and related performance, weight, and cost can be optimized as a holistic sub-system design. Additionally, the integrated design allows features (e.g., integrated deswirler tubes 330 and annular aero component support 370) that could not be practically assembled as separate components. The integrated structure also reduces assembly risks related to the functional and physical attributes of separate components. Accordingly, the integrated structure allows for manufacture of a sub-system in a predictable and repeatable manner.

This written description uses examples to disclose the invention, including the preferred embodiments, and also to enable any person skilled in the art to practice the invention, including making and using any devices or systems and performing any incorporated methods. The patentable scope of the invention is defined by the claims.

## Claims

1. A monolithic superstructure (200) to support a rotor (114) of a gas turbine engine, the monolithic superstructure comprising:
an outer case (210);
an aero component support (370); and
an aero component (300) connected to the outer case (210) via the aero component support (370), the aero component (300) including a diffuser portion (310), deswirler tubes (330) and a back wall swirl plate (320), the diffuser portion (310) longitudinally and radially aligned with the rotor (114) when the diffuser portion (310) is at a first temperature, the diffuser portion (310) longitudinally and radially aligned with the rotor (114) when the diffuser portion (310) is at a second temperature, the second temperature at least 93 degrees Celsius (200 degrees Fahrenheit) greater than the first temperature.

2. The monolithic superstructure (200) of claim 1, wherein the aero component support (370) extends between the deswirler tubes (330) and the outer case (210).

3. The monolithic superstructure (200) of claim 1, wherein the deswirler tubes (330) include air extraction ports (332) to connect the deswirler tubes (330) to a turbine cooling passage (240).

4. The monolithic superstructure (200) of claim 3, wherein the turbine cooling passage (240) extends between the aero component (300) and an accelerator (242).

5. The monolithic superstructure (200) of claim 1, wherein the rotor (114) is an impeller.

6. The monolithic superstructure (200) of claim 1, wherein the rotor (114) and the diffuser portion (310) are spaced a critical dimension at the first temperature, the critical dimension maintained within 10% when the diffuser portion (310) is the second temperature.

7. The monolithic superstructure (200) of claim 1, wherein the aero component support (370) is shaped to allow radial movement of the aero component (300) and to resist longitudinal movement of the aero component (300).

## Patentansprüche

1. Monolithischer Aufbau (200) zum Tragen eines Rotors (114) eines Gasturbinentriebwerks, wobei der monolithische Aufbau umfasst:
ein Außengehäuse (210);
einen Luftfahrtkomponententräger (370); und
eine Luftfahrtkomponente (300), die über den Luftfahrtkomponententräger (370) mit dem Außengehäuse (210) verbunden ist, wobei die Luftfahrtkomponente (300) einen Diffusorabschnitt (310), Entdrallvorrichtungsröhren (330) und eine Hinterwand-Drallplatte (320) umfasst, wobei der Diffusorabschnitt (310) längslaufend und radial auf den Rotor (114) ausgerichtet ist, wenn sich der Diffusorabschnitt (310) auf einer ersten Temperatur befindet, wobei der Diffusorabschnitt (310) längslaufend und radial auf den Rotor (114) ausgerichtet ist, wenn sich der Diffusorabschnitt (310) auf einer zweiten Temperatur befindet, wobei die zweite Temperatur um mindestens 93 Grad Celsius (200 Grad Fahrenheit) höher als die erste Temperatur ist.

2. Monolithischer Aufbau (200) nach Anspruch 1, wobei sich der Luftfahrtkomponententräger (370) zwischen den Entdrallvorrichtungsröhren (330) und dem Außengehäuse (210) erstreckt.

3. Monolithischer Aufbau (200) nach Anspruch 1, wobei die Entdrallvorrichtungsröhren (330) Entlüftungsöffnungen (332) umfassen, um die Entdrallvorrichtungsröhren (330) mit einem Turbinenkühldurchgang (240) zu verbinden.

4. Monolithischer Aufbau (200) nach Anspruch 3, wobei sich der Turbinenkühldurchgang (240) zwischen der Luftfahrtkomponente (300) und einem Beschleuniger (242) erstreckt.

5. Monolithischer Aufbau (200) nach Anspruch 1, wobei der Rotor (114) ein Laufrad ist.

6. Monolithischer Aufbau (200) nach Anspruch 1, wobei der Rotor (114) und der Diffusorabschnitt (310) bei der ersten Temperatur in einer kritischen Dimension beabstandet sind, wobei die kritische Dimension innerhalb von 10 % gehalten wird, wenn sich der Diffusorabschnitt (310) auf der zweiten Temperatur befindet.

7. Monolithischer Aufbau (200) nach Anspruch 1, wobei der Luftfahrtkomponententräger (370) dazu gestaltet ist, eine radiale Bewegung der Luftfahrtkomponente (300) zu erlauben und einer Längsbewegung der Luftfahrtkomponente (300) zu widerstehen.

## Revendications

1. Superstructure monolithique (200) pour supporter un rotor (114) d'un moteur à turbine à gaz, la superstructure monolithique comprenant :
un boîtier extérieur (210) ;
un support de composant aéronautique (370) ; et
un composant aéronautique (300) relié au boîtier extérieur (210) par l'intermédiaire du support de composant aéronautique (370), le composant aéronautique (300) comprenant une partie de diffuseur (310), des tubes de détourbillonnement (330) et une coupelle de turbulence de paroi arrière (320), la partie de diffuseur (310) étant alignée de manière longitudinale et radiale sur le rotor (114) lorsque la partie de diffuseur (310) se trouve à une première température, la partie de diffuseur (310) étant alignée de manière longitudinale et radiale sur le rotor (114) lorsque la partie de diffuseur (310) se trouve à une deuxième température, la deuxième température étant d'au moins 93 degrés Celsius (200 degrés Fahrenheit) supérieure à la première température.

2. Superstructure monolithique (200) selon la revendication 1, dans laquelle le support de composant aéronautique (370) s'étend entre les tubes de détourbillonnement (330) et le boîtier extérieur (210).

3. Superstructure monolithique (200) selon la revendication 1, dans laquelle les tubes de détourbillonnement (330) comprennent des ports d'extraction d'air (332) pour relier les tubes de détourbillonnement (330) à un passage de refroidissement de turbine (240).

4. Superstructure monolithique (200) selon la revendication 3, dans laquelle le passage de refroidissement de turbine (240) s'étend entre le composant aéronautique (300) et un accélérateur (242).

5. Superstructure monolithique (200) selon la revendication 1, dans laquelle le rotor (114) est une roue mobile.

6. Superstructure monolithique (200) selon la revendication 1, dans laquelle le rotor (114) et la partie de diffuseur (310) sont espacés à une dimension critique à la première température, la dimension critique étant maintenue dans une limite de 10 % lorsque la partie de diffuseur (310) se trouve à la deuxième température.

7. Superstructure monolithique (200) selon la revendication 1, dans laquelle le support de composant aéronautique (370) est façonné pour permettre un mouvement radial du composant aéronautique (300) et pour résister à un mouvement longitudinal du composant aéronautique (300).
